# EUROPEAN PATENT SPECIFICATION

(11) **EP 0 635 774 B1**
(45) Date of publication and mention of the grant of the patent: **13.05.1998**
(21) Application number: 93830510.9
(22) Date of filing: 17.12.1993
(51) Int. Cl.: G06F 1/00, G07F 7/10

(54) **Hand-held terminal for performing purchasing, debit, credit and drawing operations**
Tragbares Terminal zur Durchführung von Einkaufs-, Debet-, Kredit- und Abhebungsoperationen
Terminal portatif pour effectuer des opérations d'achat, débit, crédit et retrait

(30) Priority: 12.07.1993 IT MI931531
(43) Date of publication of application: 25.01.1995
(73) Proprietor: SOCIETA' PER I SERVIZI BANCARI, SSB S.p.A., 20122 Milano (IT)
(72) Inventor: Porazzi,Giorgio c/o Societa'PerI Servizi Bancari, I-20122 Milano (IT)
(74) Representative: Cicogna, Franco

(56) References cited:
- EP-A- 0 440 800
- WO-A-92/11598
- US-A- 4 523 297
- US-A- 4 870 604
- PHILIPS TELECOMMUNICATION REVIEW, vol. 47, no. 3, 1 September 1989 pages 1-19, XP 000072642 FERREIRA R C 'THE SMART CARD: A HIGH SECURITY TOOL IN EDP'

## Description

### BACKGROUND OF THE INVENTION

The present invention relates to a hand-held terminal for performing purchasing, debit, credit and drawing operation, with a very good safety.

As is known, a great number of payments for purchasing products are at present performed through commodities different from the bank services.

These commodities, which are broadly advertised by several catalogues or broadly diffused mass-media, such as, for example, newspapers and TV monitors, provide, in fact, the post service as a main partner for the financial operations.

In order to perform this mass of payments through the bank circuit, it is actually necessary to define such an architecture specifically adapted to allow a like operating facility for the user and a capillary availability of places or points at which the related operations can be performed.

In order to achieve this object, it is necessary to provide a very good managing facility that is very technically efficient processing properties with respect to the financial aspects and, mainly, with respect to the problems related to a proper and safe identification and responsibilization of the users.

Thus, this problem must be considered under the aspect of a true and proper service and, mainly, under the safety aspect.

With respect to the service aspect, it would be comparatively simple to use the modern systems based on automatic computerized responders, since these devices are conventionally based on a conventional phone set, to be used as an access terminal for the user, whereas the data collection/response center is represented by a fully autonomous computer, connected to conventional files.

This procedure is undoubtedly easy, since it affords the possibility of directly exchanging information, but, on the other hand, it has a poor performance from the safety standpoint.

In fact, in such a procedure, it is not conceptually possible to use, as at present occurs with the so-called magnetic cards, for example of the " bankomat" type, a personal secret code (PIN-personal identification number).

This type of secret code can not be used since it does not allow a good safety to be obtained, since, after a time period from its telephone use, it could be easily counterfeited.

In fact, the secret codes used for telephonic traffic are, actually, sent in a form which can be easily read-out and, moreover, they are constant in the time.

Because of these reasons, it is possible for ill-intentioned persons to easily decipher these codes.

This problem is specifically related to the medium which is used for transmitting the code, since the conventional secret code of the magnetic cards is valid as the terminal consists of a selling place or of an authorized terminal, this code being, in such a case, well cryptographically protected by suitable hardware and/or software modules.

The document WO-A-9211598 discloses a hand-held terminal substantially according to the preamble of the main claim, in which selective call receiving means are an essential operating part of this prior device, and in which a secret code is simply stored in storing means. In this document, moreover, there are no explicitly or implicitly described link means between a password and a cipher key.

The document Philips Telecommunication and Data Systems Review, vol. 47, no. 3, September 1989, pages 1-19, Ferreira R.C.: "The Smart Card: A High Security Tool in EDP", on the other hand, discloses a further hand-held terminal in which no provision is made for changing secret codes, and which provides the use of fixed keys shared by the terminal user and a host control unit.

### SUMMARY OF THE INVENTION

Accordingly, the aim of the present invention is to overcome the above mentioned drawbacks, by providing a hand-held personal terminal affording the possibility of safely remotely identifying an authorized user who, for example, desires to access specific functionsor programs of a remote processor, by means of a code which can not be practically counterfeited since it can be changed each time.

Within the scope of the above mentioned aim, a main object of the present invention is to provide such a hand-held personal terminal which, even in a case of a possible detection of the code, is so designed as to prevent a subsequent code of a sequence to be detected thereby the read-out previous code can not be used by an ill-intentioned person.

Another object of the present invention is to provide such a hand-held personal terminal which, while being effective to be used in combination with a phone set, does not limit the efficiency and range of the latter.

Yet another object of the present invention is to provide such a hand-held personal terminal which has a very reduced size and which, moreover, is very competitive from a mere economic standpoint.

According to one aspect of the present invention, the above mentioned aim and objects, as well as yet other objects, which will become more apparent hereinafter, are achieved by a hand-held terminal for performing safely purchasing, debit, credit and drawing operations, having the features of claim 1.

### BRIEF DESCRIPTION OF THE DRAWINGS

Further characteristics and advantages of the present invention will become more apparent hereinafter from the following detailed disclosure of a preferred, though not exclusive, embodiment of a hand-held terminal for performing, with a maximum safety, purchasing, debit, credit and drawing operations, and which is illustrated, by way of an indicative, but not limitative example, in the accompanying drawings, where:

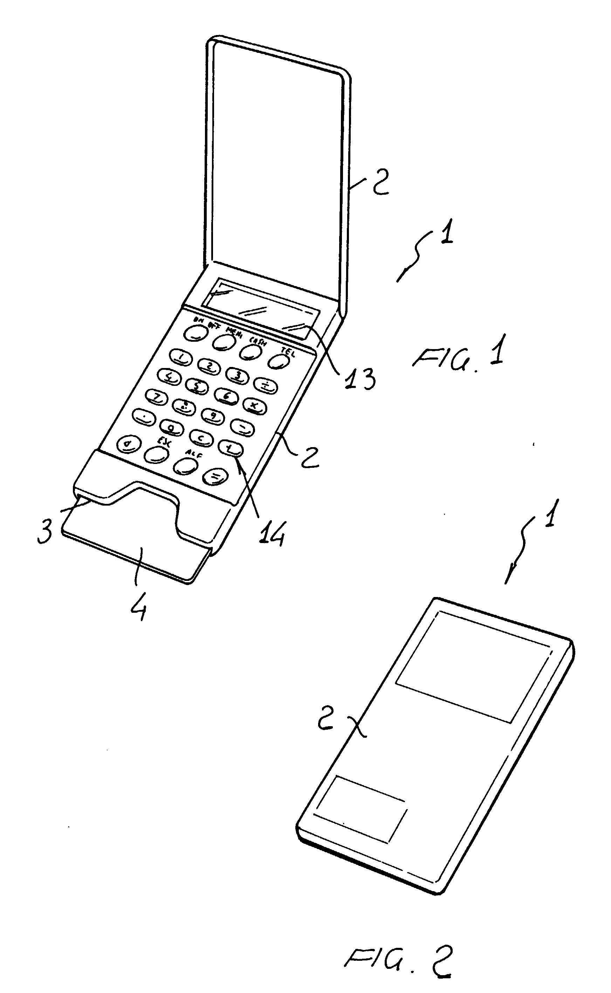

Figure 1 is a schematic perspective view of a hand-held terminal according to the invention shown in an open condition thereof;
Figure 2 is a further perspective view illustrating the hand-held terminal according to the present invention shown in a closed condition thereof;
Figure 3 illustrates a block diagram of the subject hand-held terminal;
Figure 4 illustrates a schematic electric diagram for making the hand-held terminal according to the present invention;
   and

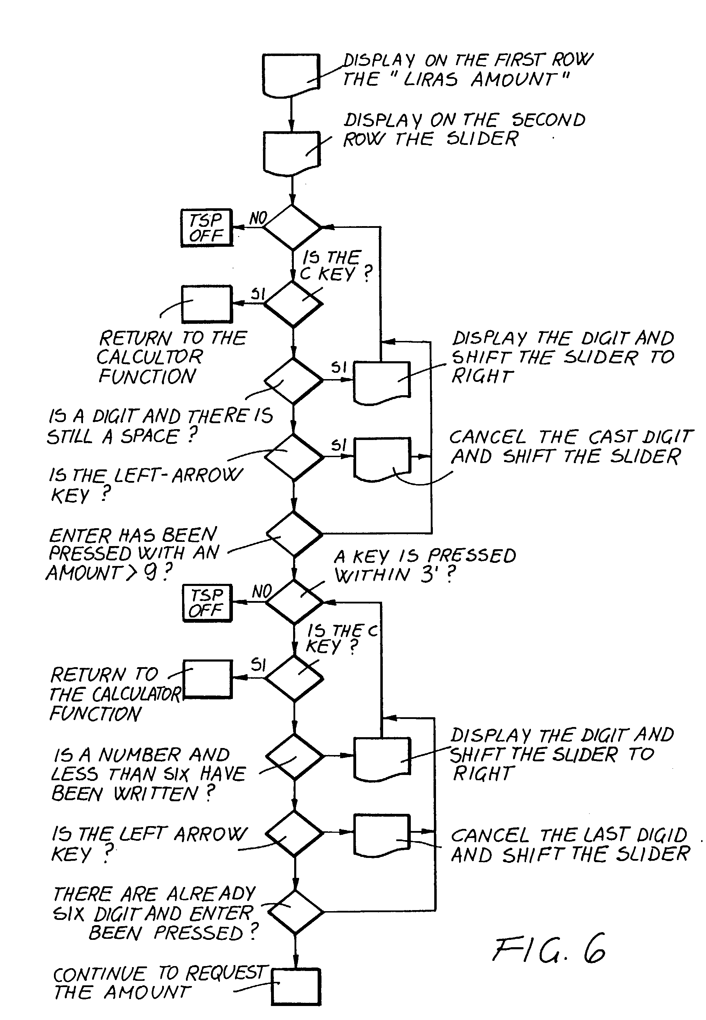

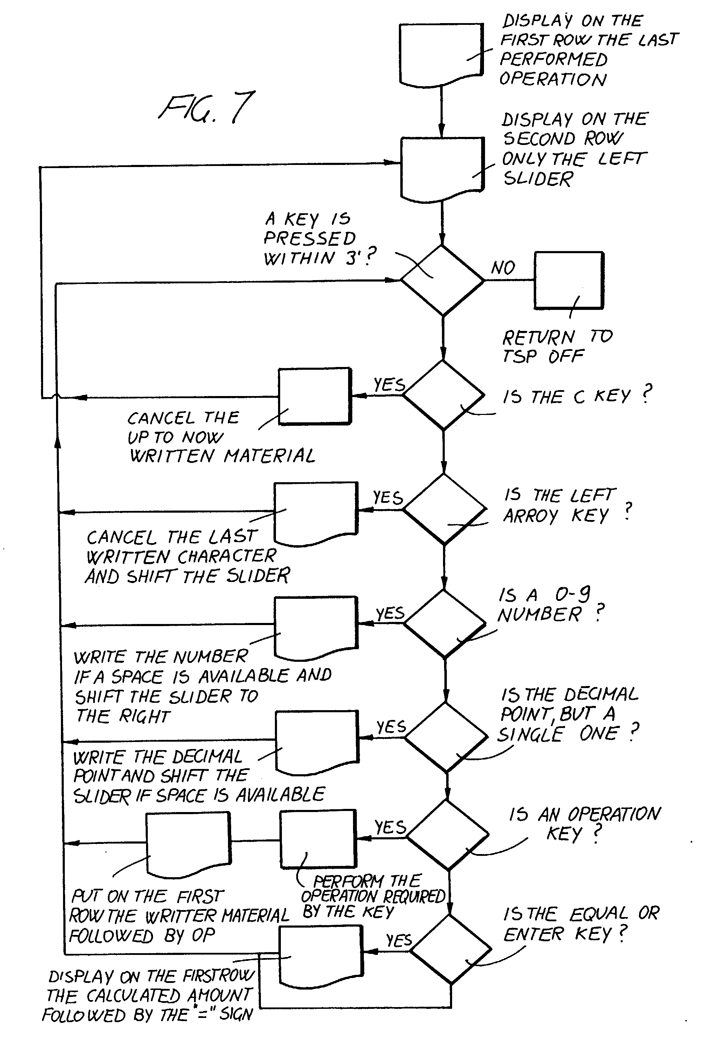

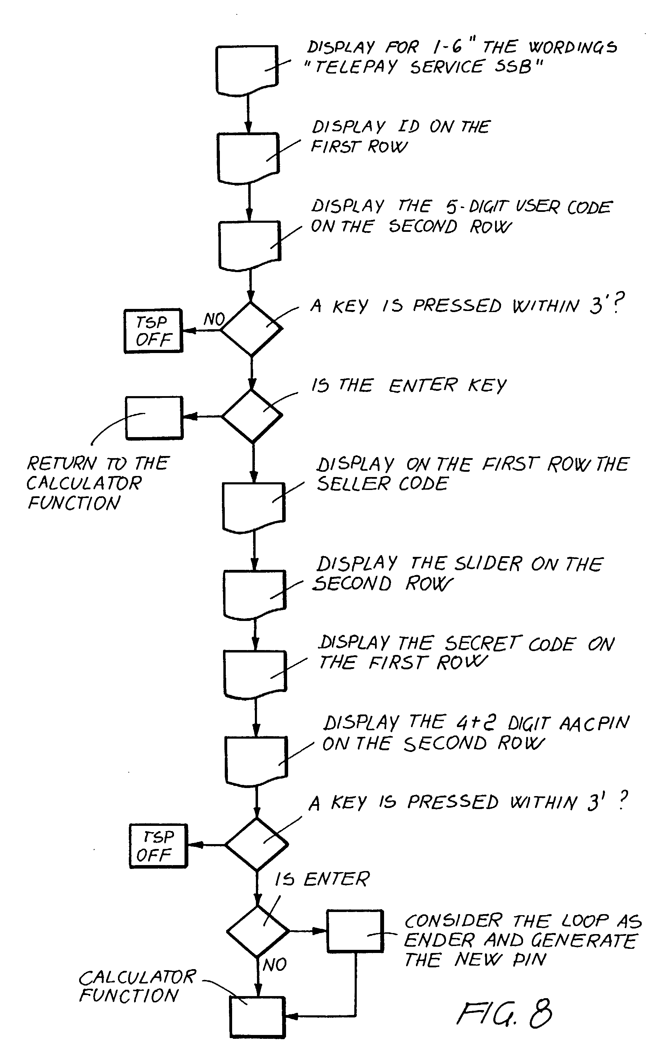

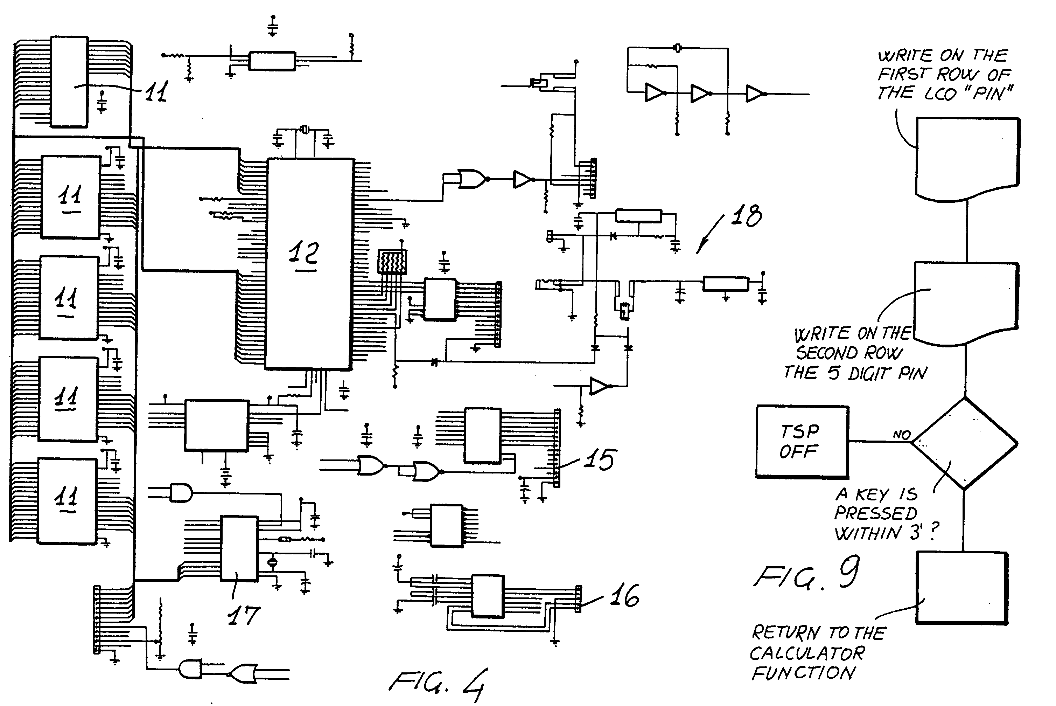

Figures 5, 6, 7, 8 and 9 show flow charts of a possible embodiment of a portion of the apparatus related to the inter-action of the user with the apparatus itself.

### DESCRIPTION OF THE PREFERRED EMBODIMENTS

With reference to the number references of the above mentioned figures, the hand-held personal terminal according to the present invention, which has been generally indicated at the reference number 1 comprises an outer casing 2, defining therein a seat 3 for housing a microprocessor card, indicated at the reference number 4.

As shown, the terminal 1 comprises a microprocessor 12 which is interconnected to a data and program memory or store 11.

The microprocessor is moreover associated with a display 13, which is arranged above a keyboard 14 connected to the microprocessor.

To said microprocessor 12 there is moreover coupled an interface 15, allowing to fit one or possible two microprocessor cards 4.

There are moreover provided means for performing a remote coupling to an initialization apparatus 16, and, furthermore, a clock or timing function 17 being moreover provided.

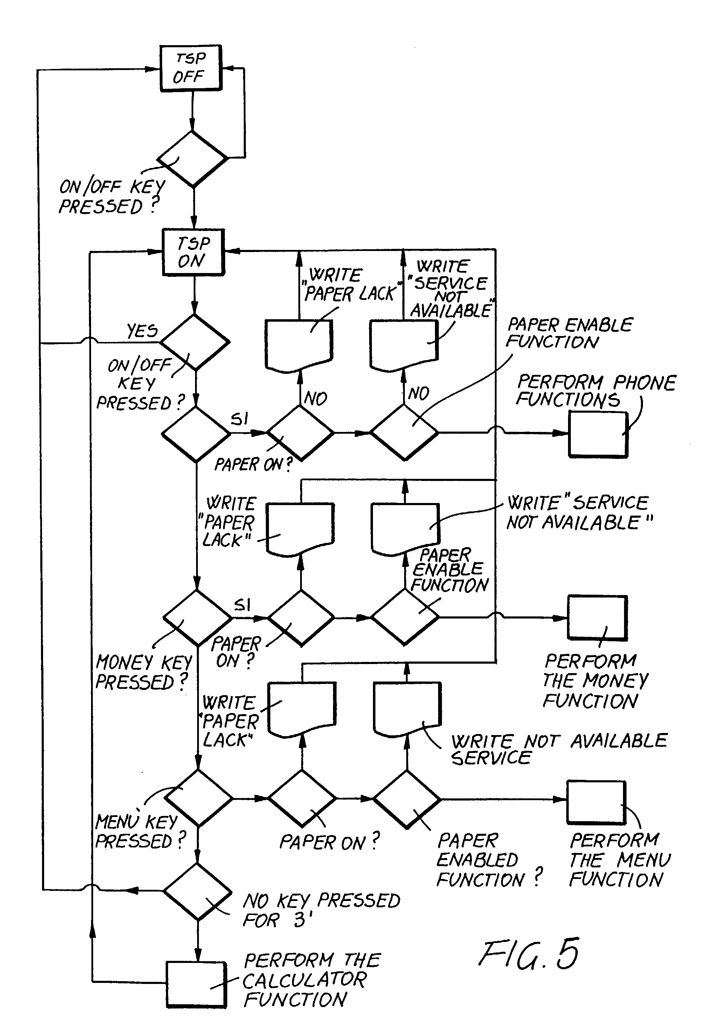

Figure 4 shows the circuits corresponding to each of these parts and to the logic which is necessary for their interconnection.

Moreover, further conventional components have been added, as necessary for providing a suitable power supply, from a battery and/or an outer source, as schematically indicated at 18.

The user, in operation, interacts with the terminal by setting an access code on the keyboard 14 and, under the control of the wordings appearing on the display 13, he/she can access the several functions.

Thus, the hand held personal terminal 1 is a means which can be used by an user at any place and which has a very safe operation, since it use a secret code which can be continuously changed.

In other words, the secret code generated thereby at the time t is different from that generated at the time t + x, where x is any value which can be defined at will.

The thus generated secret code, in particular, can also be designed so as to protect and certify not only the identity of the bearing person, but also the other data of the financial transaction, such as, for example, the money amount and the data identifying the receiving party and sending or transmitting party.

The inventive solution, accordingly, provides a hand held terminal including a keyboard having a plurality of operating keys and a display, by means of which the user, at first, can demonstrate his/her identity and moreover can carry out a dialogue in order to obtain a generation of the secret code and other necessary information, depending on the involved services.

The hand held terminal, moreover, has been specifically designed to be capable of communicating with the microprocessor card performing the main safety functions.

By mainly considering the available payment systems, it is possible to individualize the following areas involved by the present invention:
the remote payments which can be performed through a conventional telephonic set;
the fully off-line payments, of a broadly diffused type which do not involve any real time connection with a service centre, at suitably designed novel terminals including a microprocessor card;
the on-line payments at the available magnetic card terminals;
the on-line drawing operation at the present magnetic card terminals.

By using the hand-held personal terminal according to the present invention, the retailers and microprocessor card user can accordingly use novel and broader services.

Moreover, even several firms will be capable of submitting new payment possibilities, by following the herein disclosed new procedure.

An example of the first series of these services can consist of the tele-payment, of an electronic type of purse and of a safe-payment device.

In a tele-payment operation, the user, through a telephonic set, will access a service center and will require to sell a good identified by a code which, for example, can be deduced from the mass-media, and, for performing his order, will use a variable secret code which can be exclusively generated by the user hand held terminal.

At the service center, the user order, identity and availability will be verified, so as to perform all of the operations necessary for sending the good or article and related billing invoice as well as accounting operations to the respective receiving parties and this in a fully self-sufficient manner.

With respect to the electronic purse aspect, the user, by exclusively using his microprocessor card, can perform payments of small amounts, but which are usually pertormed in a great number, for example to pay a bookstall keeper, a taxi driver, telephonic bills, parking bills and so on.

In this case, at the terminal use time, the user must not introduce any secret code, since the card will actually correspond to a bank-note with the related purchasing power.

The terminal provided to the user is used for loading the card, verify the remaining credit and/or the operating capability, that is the condition or status of the user electronic purse.

Moreover, this hand held terminal also provides the possibility of performing safe payments, in order to effectively prevent any deception of the available payment systems, through authorized terminals or through terminals installed at selling places, which are actuated by national and international debit/credit cards, and being moreover possible to use the terminal in order to generate a dynamic secret code, that is a code which can be continuously changed, even with respect to other automatized services which are at present available.

In addition to the above disclosed functions, the terminal can also perform other functions such as, for example, a calculator function or an agenda function, the first of which is shown in the flow charts.

These functions can also be accessed without the provision of the microprocessor card 4.

On the contrary, the typical functions of the hand held terminal can be actuated exclusively by using the microprocessor card.

As stated, it is possible to meet a requirement of accessing two microprocessor cards at the same time, for example in order to transfer money amounts from a client card to a supplier card.

Because of this reason, the interface with the microprocessor 12 consists of a double interface, but it can be also made for coupling with an individual microprocessor card.

The microprocessor 12 performing the function of the terminal, even if in cooperation, if it is necessary, with that held in the microprocessor card 4, is provided with the necessary timing by the clock 17.

This device can also be provided with a date clock, or it can be further simplified to provide, in a limit condition, exclusively the timing indication, in order to change the codes in agreement with the central control unit.

The remote connection interface 16 will allow to transmit service-and maintenance information, and it can also be used for a first calibrating of the clock 17, or to recover or reset the operation of the terminal if it would be decided, for example, to perform a safety lock, after several attempts to access by a not valid key word.

The above mentioned interface, anyhow, is not strictly necessary to perform the main functions of the hand held terminal.

The data and program store 11 holds the programs necessary for the operation of the terminal and the space for storing therein temporary data, in the case in which it is possible to constantly hold further values within this store.

For example, by using a permanent battery power supply, this possibility can be exploited in order to control further users data, for example addresses and phone numbers of a small agenda.

It is also advantageous that the above disclosed devices have a reduced power consumption and that the power supply 18 further comprises control means for controlling or managing the consumed power, in order to provide a long battery service life, considering that the battery assembly must be used as the main power source, owing to the hand held characteristic of the terminal.

In a practical embodiment of the hand held terminal according to the present invention, there has been used a microprocessor 12 including integrated peripheral units, of the low consumption type, in particular the integrated peripheral units Z80181 of the firm Zilog.

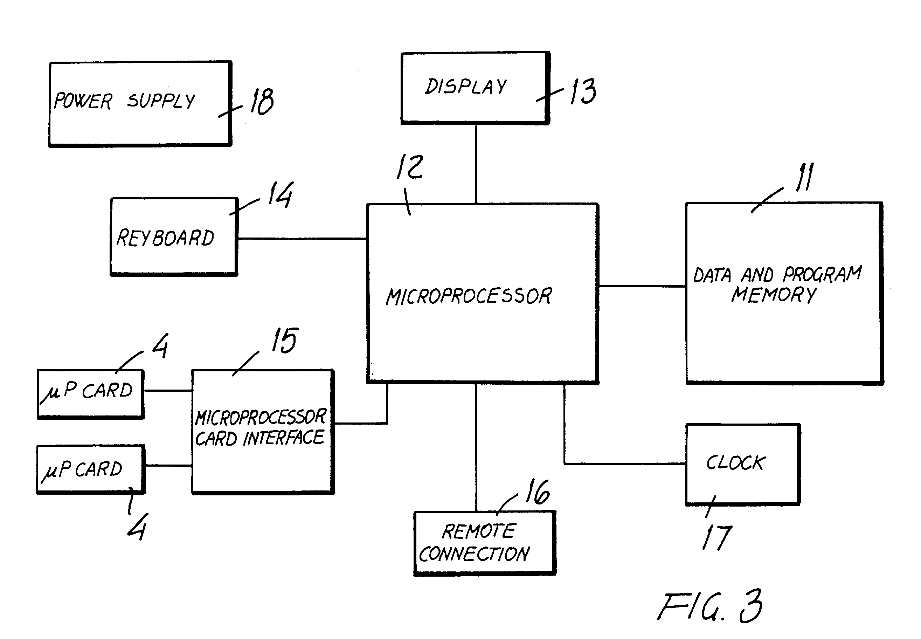

It contains the most part of the interfaces necessary for the connection to the peripheral units shown in figure 3.

The keyboard 14 is of a 8 x 4 type, including an additional key for the on/off function, which connects a signal to the ground.

It is directly scanned by the microprocessor, through several output signals of the peripheral PIA integrated therein.

The on switching operation of the apparatus is controlled through a MOSFET, which is adapted to switch on/off an electric current through a low drop adjusting device of the type LM2940-5.0, which, for example can be obtained from the National Semiconductor, which constitutes the main portion of the power supply assembly.

The microprocessor card, in turn, will be introduced into a read-out/writing device of the type SFRIJ made by the firm Omron.

The latter carries the six contacts of the card on the connector CN1, which is coupled to one of the serveral gates included in the microprocessor 12.

To the other connector CN2, on the other hand, there are supplied other signals which allow to detect the insertion or withdrawing status of the card into/from the read-out device casing.

In this case, there are also provided possible data and clock means of the magnetic bands, if the latter are provided on the microprocessor card.

All of these signals are controlled by the microprocessor, so as to provide power supply and any other signals to the card exclusively as this card has been properly introduced.

The display which has been adopted on the prototype device is of a LC (liquid crystal) type LM016L of the Hitachi Company, indicated at the reference number 13 in the drawings, and being directly connected to the microprocessor data bus, owing to its compatibility with peripheral units of the type 6800 (generation of the signal E) of the Z80181 chip as herein used.

The clock 17 (of the type MSM6242B of the Oki Company) operates as a time or clock piece, so as to provide the microprocessor with date and hour data.

Through a suitable capacitor, it is possible to adjust the oscillating frequency of the quartz crystal used for counting the elapsed time, in order to provide a proper accuracy.

A serial interface has been further built-in, provided with RS232C levels, for the connection with an outer computer, said interface being simply made by using the second ASCII provided inside the Z80181 microprocessor, followed by a simple level shifter, shifting the logic level from TTL to the 10 V as required by the mentioned standard.

The data memory or store is made, in this case, of four integrated circuits of the RAM type, in particular of the model TC551001AFL-70 of the Toshiba Company for 128 kbytes each.

The total 512 kbytes thus provided are held even in the absence of the main power supply battery, through a second spare battery supplying current to the above mentioned timepiece.

For the program, an EPROM 28C256 of the company Xicor has been adopted, which has permitted to easily change several times the operating program of the hand held terminal during the software development cycle.

From the above disclosure it should be apparent that the invention fully achieves the intended objects.

In particular, a hand-held personal terminal has been provided which allows an user the possibility of detecting the money amount in an electronic purse made by a microprocessor card, engaged in a hand-held personal terminal, and having a size like that of a well-known ISO card or, anyhow, fitting any available calculators.

Moreover, a possibility has been also provided of generating a personal secret code which can be changed depending on the specific operation and/or time, by operating in a very safe manner through the access by a microprocessor card.

Moreover, the user can perform credit and draw operation which are made very safe and can be identified owing to the above disclosed feature.

A further very important aspect of the present invention is that a hand-held terminal has been provided which can be operated in a very simple way by an user.

The terminal, furthermore, can also be used for different services and accessory functions, such as a calculator function, all of the functions being contained in a single hand-held device which can be compared to a conventional calculator.

The invention as disclosed is susceptible to several modifications and variations all of which will come within the scope of the invention.

Moreover, all of the details can be replaced by other technically equivalent elements.

In practicing the invention, the used material, as well as the contigent size and shape can be any, according to requirements.

## Claims

1. A hand-held terminal (1) suitable for performing safely purchasing, debit, credit and drawing operations, said hand-held terminal comprising a terminal casing (2), which can be used at any desired place by the user, and including a keyboard (14) for keying thereon an access code, for securing access to said hand-held terminal (1), which can be monitored by a central control unit for actuating services of said hand-held terminal (1), a microprocessor card (4) being moreover provided adapted to be introduced into said hand-held terminal (1) in order to access the services thereof, **characterized by** a secret code (private key) generating microprocessor assembly (14,12) which is adapted to generate a secret code which can be continuously changed, allowing the said services to be performed in a safe way without any electronic connection, wireless or not, to a central control unit.

2. A hand-held terminal (1), according to Claim 1, wherein the secret code (private key) generated at a time t is different from a secret code generated at a time t+x, x being a variable which can be selected at will.

3. A hand-held terminal (1), according to claim 1, wherein said services comprise telepayment, electronic purse and usual payment services performed safely without the presence of a representative of the financial institution and without any electronic (wireless or not) connection to an external control unit.

4. A hand-held terminal (1), according to Claim 1, wherein said microprocessor (12) is connected to timing clock means (17) to change said secret code in agreement with said central control unit.

## Patentansprüche

1. Ein tragbares Endgerät (1), das für die sichere Durchführung von Kauf-, Lastschrift-, Kredit- und Abhebungsvorgängen geeignet ist, wobei dieses tragbare Endgerät ein Endgerätgehäuse (2), das der Benutzer an jedem beliebigen Ort benutzen kann, sowie eine Tastatur (14) umfaßt, um darauf einen Zugangscode einzugeben, der den Zugang zu diesem tragbaren Endgerät (1) sichert und der von einer zentralen Steuereinheit für die Durchführung von Vorgängen mit diesem tragbaren Endgerät (1) überwacht werden kann, wobei femer eine Mikroprozessorkarte (4) bereitgestellt ist, die angepaßt ist, in dieses tragbare Endgerät (1) eingeführt zu werden, um den Zugang zu dessen Diensten zu erlangen, gekennzeichnet durch eine Mikroprozessorvorrichtung (141, 12) zur Erzeugung eines Geheimcodes (privaten Schlüssels), die angepaßt ist, einen jederzeit veränderbaren Geheimcode zu erzeugen, was die sichere Durchführung dieser Dienste ohne jegliche elektronische Verbindung, ohne oder mit Drähten, zu einer zentralen Steuereinheit erlaubt.

2. Ein tragbares Endgerät (1) nach Anspruch 1, worin sich der zur Zeit t erzeugte Geheimcode (private Schlüssel) von einem zu einer Zeit *t+x* erzeugten Geheimcode unterscheidet, wobei x eine willkürlich ausgewählte Variable ist.

3. Ein tragbares Endgerät (1) nach Anspruch 1, worin diese Dienste Femzahlung, elektronische Zahlung und übliche Zahlungsdienste umfassen, die sicher und ohne die Anwesenheit eines Vertreters einer finanziellen Institution und ohne jegliche elektronische Verbindung (ohne oder mit Drähten) zu einer extemen Steuereinheit durchgeführt werden.

4. Ein tragbares Endgerät (1) nach Anspruch 1, worin dieser Mikroprozessor (12) an einer Zeitgebevorrichtung (17) angeschlossen ist, um diesen Geheimcode in Übereinstimmung mit dieser zentralen Steuereinheit zu verändern.

## Revendications

1. Terminal (1) portatif propre à réaliser de manière sûre des opérations d'achat, de débit, de crédit et de retrait, ledit terminal portatif comprenant un boîtier de terminal (2) utilisable- partout de la part de l'utilisateur aussi bien qu'un clavier (14) pour y composer un code d'accès pour protéger l'accès audit terminal (1) portatif, lequel peut être surveillé par une unité de commande centrale pour les services dudit terminal portatif (1), une carte à microprocesseur (4) étant de plus mise en oeuvre qui est adaptée à l'insertion dans ledit terminal portatif (1) afin d'accéder à ses services, caractérisé par un dispositif à microprocesseur (141, 12) engendrant un code secret (clé privée), lequel est adapté à engendrer un code secret toujours changeable, permettant d'effectuer lesdits services de manière sûre sans aucune connexion électronique, câblée ou non, à une unité de commande centrale.

2. Terminal (1) portatif selon la revendication 1, dans lequel le code secret (clé privée) engendré au temps *t* est différent d'un code engendré au temps *t+x,* x étant une variable choisie arbitrairement.

3. Terminal (1) portatif selon la revendication 1, dans lequel lesdits services comprennent le télépaiement, le paiement électronique et d'autres services de paiement habituels qui sont effectués de manière sûre en l'absence d'un représentant de l'institution financière et sans aucune connexion électronique (câblée ou non) à une unité de commande centrale externe.

4. Terminal (1) portatif selon la revendication 1, dans lequel ledit microprocesseur (12) est connecté à un dispositif à horloge (17) pour varier ledit code secret an concordance avec ladite unité de commande centrale.
